Europäisches Patentamt

(19) European Patent Office

Office européen des brevets

(11) Publication number: **0 124 573**
**B1**

(12) **EUROPEAN PATENT SPECIFICATION**

(45) Date of publication of patent specification: **15.06.88**

(51) Int. Cl.⁴: **F 24 H 7/04**

(21) Application number: **83903597.9**

(22) Date of filing: **26.10.83**

(86) International application number:
**PCT/SE83/00366**

(87) International publication number:
**WO 84/01814 10.05.84 Gazette 84/12**

(54) ARRANGEMENT COMPRISING A HEAT ACCUMULATOR AND A HEAT EXCHANGER.

(30) Priority: **29.10.82 SE 8206155**
**11.11.82 SE 8206403**
**11.11.82 SE 8206404**
**06.05.83 SE 8302610**

(43) Date of publication of application:
**14.11.84 Bulletin 84/46**

(45) Publication of the grant of the patent:
**15.06.88 Bulletin 88/24**

(84) Designated Contracting States:
**AT BE CH DE FR GB LI NL SE**

(56) References cited:
**DE-A-1 579 686**
**DE-A-1 579 836**
**DE-A-1 679 465**
**DE-A-1 753 211**
**DE-A-1 753 214**
**DE-A-1 753 246**
**DE-A-1 778 983**
**DE-A-1 809 603**
**DE-A-1 809 665**
**DE-A-1 812 340**

(73) Proprietor: **JAKOBSSON, Leif**
**Vindön 8736**
**S-440 90 Henan (SE)**

(72) Inventor: **JAKOBSSON, Leif**
**Vindön 8736**
**S-440 90 Henan (SE)**

(74) Representative: **Graudums, Valdis et al**
**Albihn West AB Stora Nygatan 15**
**S-411 08 Göteborg (SE)**

(56) References cited:
**DE-A-1 914 887**
**DE-A-2 114 666**
**DE-A-2 258 755**
**DE-A-2 402 497**
**DE-A-3 011 434**
**DE-B-1 281 657**
**FR-A-1 429 176**
**FR-A-1 434 485**
**US-A-4 105 895**

## Description

The present invention relates to the combination of a heat accumulator and a heat exchanger, more precisely to an accumulator of the type that is arranged in heat exchange relation with a heat exchanger system for transferring energy to said system.

The original PCT application for this invention has been divided. The present text relates to the parent invention and there are two further texts representing a first divisional application published under number 0 183 327 and a second divisional application published under number 0 183 328.

The application published under number 0 183 327 discloses a contact heat transfer arrangement and the application having the publication number 0 183 328 discloses a heat accumulator arranged in heat exchange relation with a cooling/heating machine.

The problem behind the invention is to accomplish an accumulator of reasonable dimensions and easily adaptable/insertable to/into existing heat exchanger systems, for instance heating boiler constructions and suitable for series production by established techniques.

Of course, the need for reduction of energy costs has been recognized at an early stage and there have been proposed for instance a number of heating systems using cheap night energy. Such a known solution makes use for instance of a water tank as storing vessel. In order to provide an energy storing capacity at a reasonable level, bulky, space and cost demanding constructions are required. Other known constructions are also based on complex arrangements which are expensive and constitute doubtful solutions to the problem of using cheap night energy.

In DE—A—1 679 465 there is disclosed a technique where a heat accumulator is connected in series with a heating system and where large volume heat transfer pipes of chamber type are arranged in a heat accumulator block of a high heat capacitivity. The pipes are dimensioned such that vapour is formed in the chambers when there is no heat transfer from the block. When restarting the heat transfer the vapour is pressed out successively from each chamber. Such operation involves control problems. In order to reduce the risk of uncontrolled vapour distribution there is suggested a condensor in the outlet from the accumulator and/or separate vapour outfeed from individual chambers.

Another system for managing excess vapour formation during time periods of low heat output from a high heat capacitivity heat accumulator is shown in DE—A—1 753 211. Such system requires an auxiliary condensor arrangement comprising a water system including an expansion vessel, a pump and a control means for the pump sensing the temperature in the system heated by the accumulator.

The present invention provides an arrangement comprising a heat accumulator and a heat exchanger, for instance a boiler. The accumulator comprises a body of a material having a high heat capacitivity and a high melting point, for instance cast iron, ceramics, etc., and the body is arranged for being heated by electric energy to a temperature considerably higher than the maximum temperature of the heat exchanger. A conduit containing a fluid in a liquid phase of a relatively low boiling point, for instance water, is arranged in heat transferring communication with the heat exchanger and the heat accumulator body.

The arrangement is characterized in that a circulation pump is arranged in said conduit for fluid transport between the accumulator body and the heat exchanger and having the suction side thereof in communication with an expansion vessel, establishing a predetermined maximum pressure and in that a temperature sensing means is arranged such that the pump is stopped when a predetermined temperature is reached in the heat exchanger, thereby creating in said conduit within the accumulator body a dry vapour state of moderate pressure established by the expansion vessel, the vapour containing volume of the conduit being such that the vapour is pressed out at once when the pump obtains a start signal from said temperature sensing means for renewed heat transfer between the accumulator body and the heat exchanger.

The most preferred embodiment at present makes use of an open conduit in direct communication with the heat exchanger.

In another embodiment the heat exchanger may comprise a closed loop.

The control device of the pump preferably comprises a thermostat and/or a thyristor device for sensing the temperature of the water in the heat exchanger system and/or at the input to and/or output from the heat exchanger.

In the most preferred embodiment at present, the heat accumulator body is arranged for being heated to said high temperature by using electric night energy.

In one embodiment the accumulator body comprises at least two sub-blocks between which a plate having a good heat conducting capacity, for instance copper, is inserted.

On said at least one plate there are arranged pipes, forming part of a conduit communicating with the heat exchanger.

The accumulator body is for instance manufactured from a ceramics material having approximately the following composition, measured in %—by weight, 37% $Al_2O_3$, 5% $SiO_2$, 17% $Fe_2O_3$, 1.7% $TiO_2$, 38% $CaO$, 0.5% $MgO$ and 0.8% alkaline agents.

In a further embodiment the accumulator consists of ceramics material and heating wires are placed in holes in the ceramics material and connected in series to an electric supply source.

For improving the heat transfer heat pipes might be arranged in the accumulator body.

In order to minimize valve arrangements and upgrade the conduit for the liquid phase conduit preferably the lowest part of the accumulator is placed at a level higher than the lowest fluid level in the heat exchanger system.

The pump advantageously is placed at the lowest level of the fluid system.

In order to elucidate the inventive idea further, some embodiments of the invention will now be described by reference to the accompanying drawings, where

Figure 1 schematically shows a heat accumulator according to the invention in open, direct communication with the artesian water system of a heating system/-heating boiler,

Figure 2 schematically shows the principal in another type of electric heating boiler,

Figure 3 shows a similar version,

Figure 4 shows the accumulator element as a separate unit in a heating boiler construction generally similar to the one in Figure 2,

Figure 5 schematically shows a method for manufacturing of an accumulator block provided with channels,

Figure 6 shows an accumulator body consisting of several sun-blocks,

Figure 7 shows such a body inserted in a double sleeved boiler,

Figure 8 schematically shows an arrangement of heat pipes inserted in the accumulator body,

Figure 9 shows a couple of accumulator body elements.

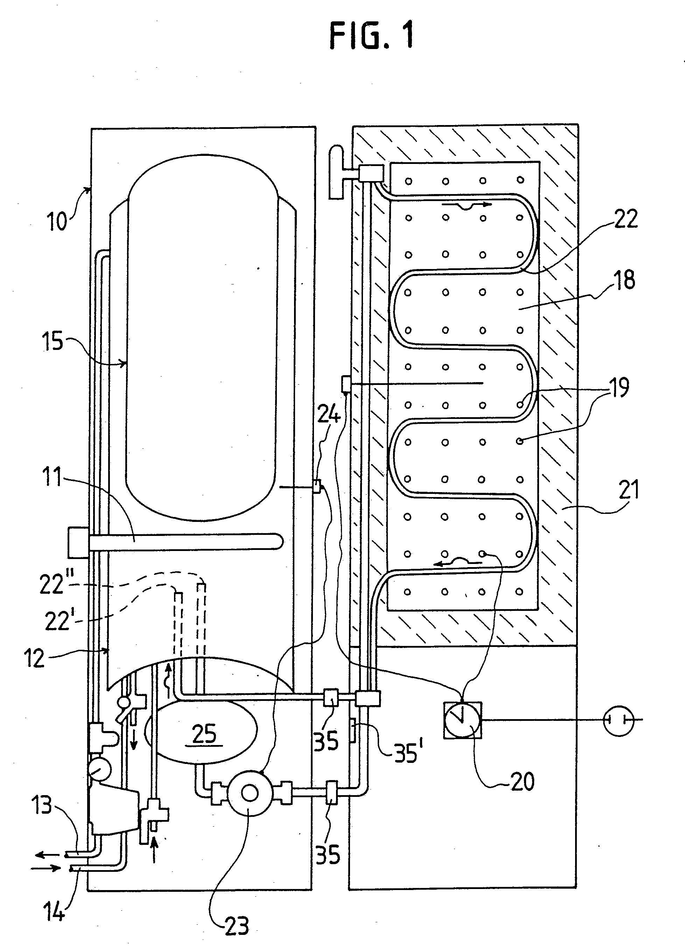

The heating boiler indicated by the reference numeral 10 in Figure 1 is an electric heating boiler. In the known versions, said boiler type is of such a type where an electric heating cartridge 11 accomplishes the heating of the water in the distributing pipe system 12. Conduits to and from the radiators have been denoted 13 and 14. The tap warm water system 15 may be heated from the surrounding system 12 or provided with a separate heating cartridge (not shown).

The boiler in Figure 1 has a separate heat accumulator body 18 of a material having high heat storing capacitivity, for instance of cast iron or ceramics material, for an example of the type comprising $Al_2O_3$, $SiO_2$, $Fe_2O_3$, $TiO_2$, CaO, MgO and alkaline agents in the amounts of 37%, 5%, 17%, 1.7%, 38%, 0.5%, and 0.8%, respectively, measured by weight. The effective heat capacity of a body of said ceramics material and of a size approximately $40\times40\times80$ cm$^3$ may be estimated to be 50.000 kcal at a temperature of around 400°C. The energy corresponds roughly to the energy need of a normal one family housing an ordinary winter day. The accumulator element 18 preferably should be placed at a higher level than the lowest water level of the boiler. Such an arrangement allows elimination of check valves.

An electric wire heating arrangement 19, comprising for instance "Kanthal"-wires (registered trade mark), has a number of wire resistor elements connected in series and has inserted in the electrically non-conducting accumulator body 18. The arrangement of electric wires connected in series allows a lower voltage in each section and a higher heat dissipation. The electric heating wires 19 may for instance in total dissipate 9 kW, i.e., between 10 p.m. and 5 a.m. such an arrangement of wires provide 63 kWh supplied energy. The heating wires, for instance of the "Kanthal"-type (registered trade mark), may be of relatively large diameter. The operation of the heating wires 19 preferably is controlled by a timer 20 and a thermostat.

There is a thick insulation 21 around the heat body 18, preferably provided with a heat reflecting surface layer/coating. In the body 18 there is built in or inserted a pipe conduit 22, containing a fluid, for instance water. The pipe 22 provides for heat exchange relation between the body 18 and the distributing pipe system 12 when a circulation pump 23 is activated, preferably controlled by a thermostat 24 in the system 12 and/or a thyristor controlling the circulation speed of the pump in relation to the temperature at the input to the pipe conduit 22 or the temperature difference between the input and output.

The pipe conduit 22 is open and has ends 22', 22'' placed in the distributing pipe system 12. The pump may be of the two-winding type starting at a higher rpm and running at a lower rpm after a predetermined time.

In the event that the accumulator body 18 would be of a not sufficient capacity, there is also an electric cartridge 11 acting as a spare/auxiliary unit.

The pipe conduit 22 as well as the distributing pipe system 12 communicates with an expansion vessel 25.

The suction side of the pump 23 communicates with the expansion vessel 25, which is ventilated to the environment and comprises a sufficient amount of water. Valves 35 are preferably arranged for preventing unintentional communication between the water supply in the vessel 25 and the pipes/loops in the heat accumulator body 18. The valves close automatically at current/voltage break down and when any pipe in the heat accumulator starts leaking for some unexpected reason. In the latter event, a hydrostator 35', an element sensing moisture operates the valves 35.

When the correct temperature, for instance 70°C, has been obtained in the heating boiler, a signal is obtained from the thermostat 24 and/or thyristor, and the pump 23 is stopped. In the pipe 22 of the accumulator body the water is expanded, during vapour formation, into the boiler and/or the expansion vessel 25. There will be no self circulation in the system, instead an equilibrium state will be assumed where the dry vapour of moderate pressure will be in balance with the water in the system. In the accumulator there will remain vapour of a pressure corresponding to the height/pressure established by the expansion vessel 25. The vapour is dry and unsaturated and forms an excellent heat insulating medium and, as mentioned, prevents self circulation.

When the pump thereafter obtains a start signal, there is water directly on the suction/pressure side of the pump and as the pump starts with full effect and high speed, the vapour is pressed out at once and transformed into water which circulates in the direction indicated by the arrows. As mentioned, the pump preferably is thyristor controlled and returns quickly, to a circulation speed, preferably related to the temperature difference between the input to and output from the boiler, meaning that the circulation speed is variable within a wide range. The pump may also be of the type comprising twin windings, i.e. a pump starting with a high speed and automatically, for instance after one minute, slowing down to a lower speed.

If the temperature of the artesian water system is 70°C, the temperature in the pipe loop outside the accumulator does not have to exceed 80°C.

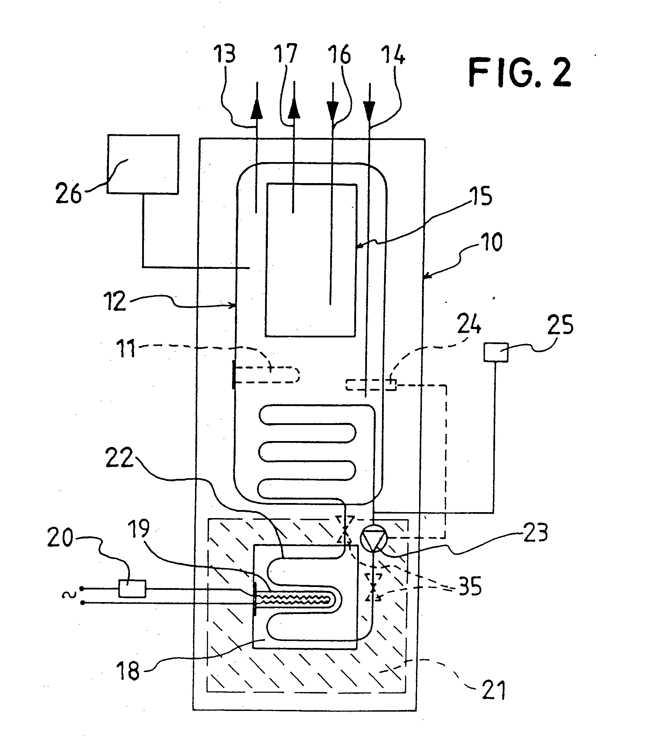

The heating boiler indicated by the reference numeral 10 in Figure 2, externally and as far as the water system is concerned, is a conventional electric heating boiler. In known versions the heating boiler type is such where an electric heating cartridge 11 takes care of the heating of the water in the distributing pipe system 12. Conduits to and from, respectively, the radiators have been denoted by 13 and 14. The tap warm water system 15 may be heated from the surrounding system 12 or have a separate heating cartridge (not shown). Conduits to and from, respectively, the warm water vessel 15 have been identified by the numerals 16 and 17.

At the lower end of the heating boiler in Figure 2 there is a heat accumulator body 18 of a material having a high heat storing capacity, for instance cast iron or ceramics material, for an example of the type shown in Figure 1.

An electric heating loop 19 formed by an electric cartridge is inserted in the accumulator body 18 and may for instance dissipate 9 kW, i.e. between 10 p.m. and 5 a.m. such a cartridge dissipates 63 kWh of supplied energy. The switching to and from of the cartridge 19 preferably is controlled by a timer 20 and thermostat.

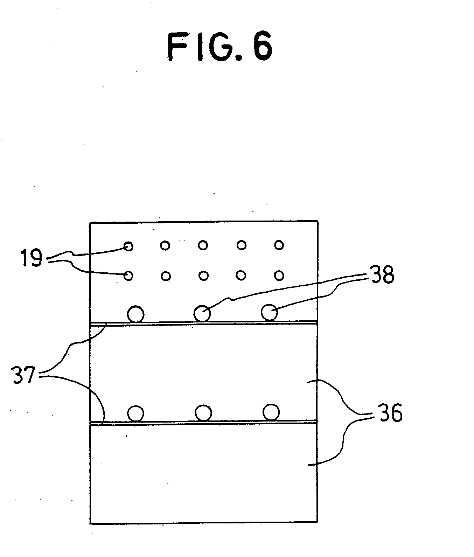

There is a thick insulation around the heat body 18, preferably also provided with a heat reflecting surface layer/coating. In the body 18, there is built in or inserted a pipe loop 22 containing a fluid, for instance, water. The loop 22 sets the body 18 in heat exchange relation with the distributing pipe system 12 when a circulation pump 22 is activated, preferably under the control of a thermostat 24 in the system 12 and/or a thyristor (Figure 6) controlling the circulation speed of the pump by sensing the temperature at the input to the loop 22 or the temperature difference between the input and output.

In the event that the accumulator body 18 would not have a sufficient capacity, there is also an electric cartridge 11 acting as a spare/auxiliary unit.

The water loop 22 as well as the distributing pipe system 12 communicate with an expansion vessel 25, 26. It is also possible to use the cartridge 19 for direct heating of the water in the loop 22.

The suction side of the pump 23 communicates with the expansion vessel 25 which is vented to the environment and comprises a sufficient amount of water. Check valves 35 are preferably arranged for preventing any unintentional communication between the water supply of the vessel 25 and the loops in the heat accumulator 18.

When the correct temperature, for instance 70°C, has been obtained in the heating boiler, there is obtained a signal from the thermostat 24 and/or the thyristor and the pump 23 stops. The check valves 35 block the water supply from the expansion vessel 25 to the accumulator. In the accumulator there will remain vapour of a pressure corresponding to the height of the expansion vessel 25.

When the pump thereafter receives a start signal, there is water directly on the suction/pressure side and as the pump starts with full effect and high speed, the vapour is pushed out at once. As mentioned, the pump preferably is thyristor controlled and returns to a circulation speed variable within wide limits and preferably controlled by the temperature difference between the input to and output from the heating boiler.

If the temperature of the distributing pipe system is 70°C, the temperature in the pipe loop outside the accumulator does not need to exceed 80°C.

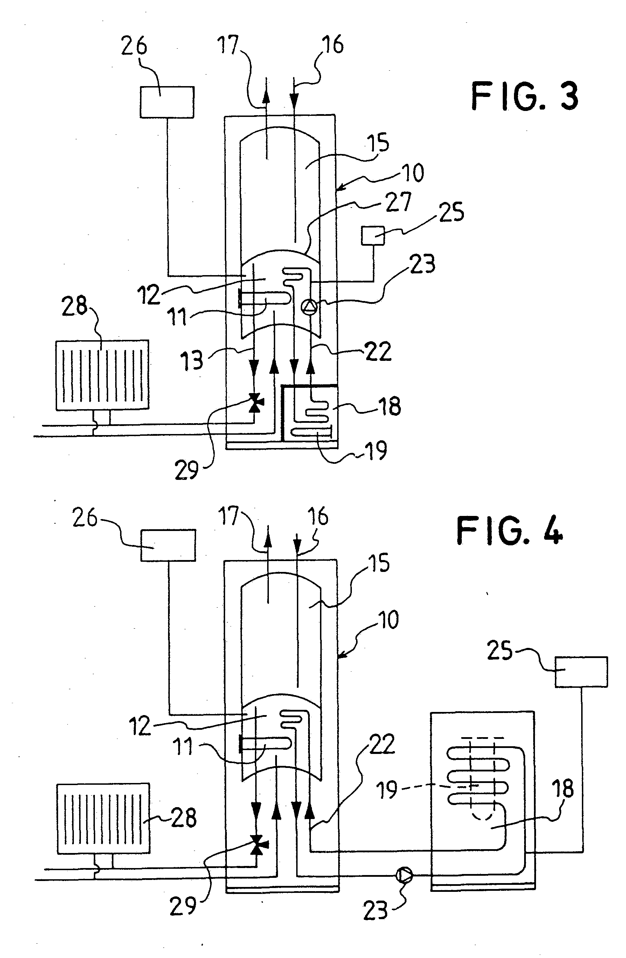

In Figure 3 there has been shown a heating boiling where the accumulator element 18 serves the distributing pipe system 12 basically in the same manner as in Figure 1, but where the distributing pipe system 12 and the tap water system 15 are separated by a partition wall 27 extending across the heating boiler. In Figure 3 there has been shown also a radiator 28 and a shunt valve 29 of known type.

The arrangement in Figure 4 differs from the previous ones in that the heat accumulator body 18 is placed as a separate unit outside the actual heating boil 10. For the rest, the principle for the heat exchange is the same.

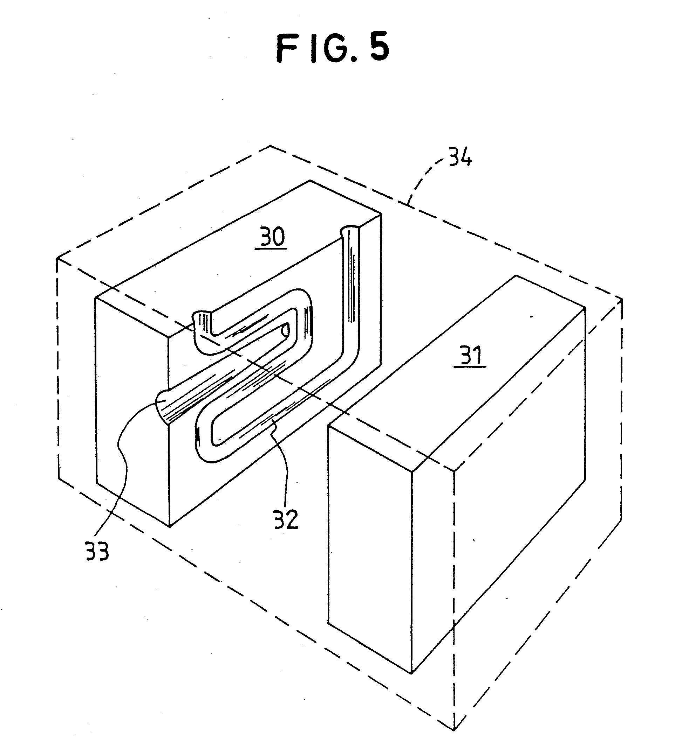

In Figure 5 there is shown schematically how two blocks 30 and 31—one having grooves 32, 33 formed therein corresponding to the loop 22 placeable therein and the electric cartridge 19—are arranged for being brought together, for instance in a metal box 34 which thereafter is provided with connection pieces and insulation and installed in the heating boiler or arranged as a separate unit.

In Figure 6 there is shown an accumulator body comprising several sub-blocks 36, for instance of the previously mentioned ceramics material. The sub-blocks are separated by plates 37, for instance of copper. On the plates there are pipes 38, preferably also of copper, attached, for instance by soldering, rivetting, etc. and forming part of the fluid system. The plates 37 promote the heat transport to the fluid in the pipe 38 and compensate for any defects in the contact heat transfer between adjacent blocks. It is also assumed that the plates tend to counteract heat exhaustion and cracking due to such exhaustion in the areas of the pipes.

In Figure 6 the heat cartridges 19 are spread out in respective blocks. Other arrangements are possible, the elements/cartridges may for instance be attached to the same plate as the pipes 38.

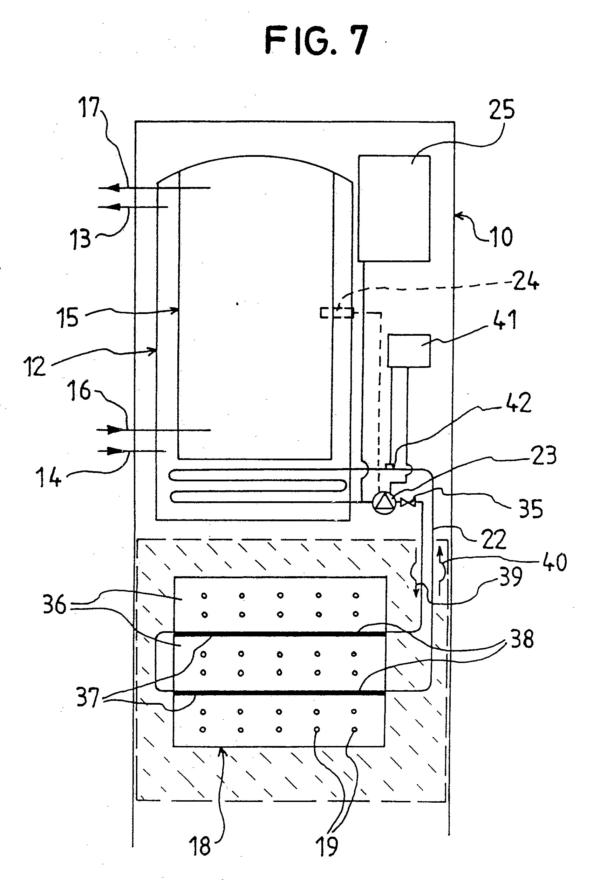

In Figure 7 there is shown a heating boiler comprising an accumulator body 18 consisting of three sub-blocks 36 which are separated by copper plates 37 forming heat conducting bridges. On said plates there are pipes 38 attached by rivets, or in other suitable manner and forming part of the fluid circulation loop 22.

The circulation direction in the loop 22 is indicated by the arrows 39, 40. The circulation pump 23 has a thyristor device 41 which controls the speed of the pump 23 continuously and within wide limits under the control of a signal from a sensor 42 at the input to the loop system within the distributing pipe system of the heating boiler.

The expansion vessel 25, which is ventilated to the environment, feeds the suction side of the pump with water, and the vapour, of a pressure corresponding to the height of the expansion vessel, that might be formed in the loop part between the check valve 35 and the loop part within the distributing pipe system 12 in the heating boiler, during the inoperative period of the pump, is easily pushed out through the expansion vessel when the pump is started again.

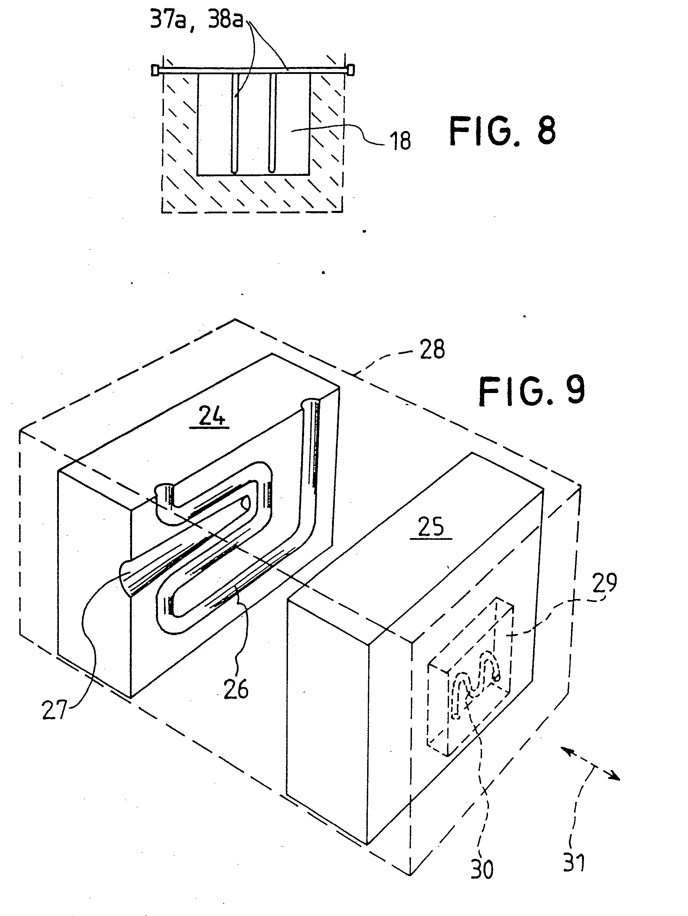

Figure 8 schematically shows a heat accumulator body 18 equipped with heat conducting plates and/or heat pipes 37a, 38a for the distribution of heat within the body 18 and/or transport of heat to the heating boiler. Actually, heat pipes may constitute the sole means for transfer of heat to the distributing pipe system. As is well known, heat pipes have a heat conductivity which is up to 10.000 times higher than for well conducting metals.

In Figure 9 there is schematically shown how two cast iron blocks 24, 25—one having grooves 26, 27 formed therein corresponding to the loop 20 to be placed in the body 15 and the electric cartridge 17—are arranged for being put together, for instance in a metal box 28, which thereafter is provided with connection pieces and insulation.

In Figure 9 there is shown a building-up 29 on one of the cast iron halves 25. In the building-up, which is of a heat well conducting material, there is formed grooves 30. The idea is that, as an alternative, the collector element 14 of the heating/cooling machine shall be settable to and from, respectively, contact heat transfer by movement in the direction of the double arrow 31. If the heat transfer is accomplished entirely by contact heat transfer, the groove 26 is of course superfluous and in such a case the body 15 may be a one piece body.

## Claims

1. An arrangement comprising a heat accumulator and a heat exchanger, for instance a boiler, said heat accumulator having a body (18) of a material having a high heat capactivity and a high melting point, for instance cast iron, ceramics material, etc., which is arranged for being heated by electric energy (19) to a temperature considerably higher than the maximum temperature of the heat exchanger, and a conduit containing a fluid in a liquid phase of a relatively low boiling point, for instance water, in heat transferring communication with the heat exchanger and the heat accumulator body, characterized by a circulation pump (23) arranged in said conduit for fluid transport between the accumulator body and the heat exchanger and having the suction side thereof in communication with an expansion vessel, establishing a predetermined maximum pressure, and by temperature sensing means (24) arranged such that the pump is stopped when a predetermined temperature is reached in the heat exchanger, thereby creating in said conduit (22) within the accumulator body a dry vapour state of moderate pressure established by the expansion vessel, the vapour containing volume of the conduit being such that the vapour is pressed out at once when the pump obtains a start signal from said temperature sensing means for renewed heat transfer between the accumulator body and the heat exchanger.

2. An arrangement according to claim 1, characterized in that said conduit is an open conduit in direct communication with the heat exchanger.

3. An arrangement according to claim 1, characterized in that said conduit is formed as a closed loop (22).

4. An arrangement according to claim 2, characterized in that a control device for the pump comprises a thermostat (24) and/or a thyristor device (41) sensing the temperature in the heat exchanger and/or at the input to and output from, respectively, the heat exchanger.

5. An arrangement according to claim 1, characterized in that the heat accumulator body (18) is arranged for being heated to said high temperature by using electric night energy.

6. An arrangement according to any one or any of the preceding claims, characterized in that the accumulator body comprises at least two sub-blocks (36), between which a plate having a good heat conducting capacity, for instance of copper, is inserted.

7. An arrangement according to claim 6, characterized in that pipes (38) are arranged on said plate for forming part of said conduit (22) communicating with the heat exchanger.

8. An arrangement according to claim 1, characterized in that the accumulator body is manufactured from a ceramics material having approximately the following composition, measured by weight: 37% $Al_2O_3$, 5% $SiO_2$, 17% $FeO_3$, 1.7% $TiO_2$, 38% $CaO$, 0.5% $MgO$ and 0.8% alkaline agents.

9. An arrangement according to any one or any of the preceding claims, characterized in that the accumulator consists of a ceramics material, and that heating wires are placed in holes in the ceramics material and connected in series to an electric supply source.

10. An arrangement according to any one or any of the preceding claims, characterized in that heat pipes are arranged in the accumulator body.

11. An arrangement according to claim 2 or any one or any of claims 4 to 10, characterized in that the lowest part of the accumulator is placed at a level higher than the lowest fluid level in the heat exchanger.

12. An arrangement according to claim 11, characterized in that the circulation pump (23) is placed at the lowest level of the fluid system.

**Patentansprüche**

1. Vorrichtung mit einem Wärmespeicher und einem Wärmetauscher, beispielsweise einem Kocher, wobei dieser Wärmespeicher einen Körper (18) aus einem Material mit einer hohen Wärmekapazität und einem hohen Schmelzpunkt, wie beispielsweise Gußeisen, Keramikmaterial usw., der so angeordnet ist, daß er durch elektrische Energie (19) auf eine wesentlich höhere Temperatur als die Maximaltemperatur des Wärmetauschers erhitzt wird, und eine Leitung, die ein Fließmittel in einer flüssigen Phase mit einem relativ niedrigen Siedepunkt, wie beispielsweise Wasser, in Wärmeüberführungsverbindung mit dem Wärmetauscher und dem Wärmespeicherkörper enthält, hat, gekennzeichnet durch eine Zirkulationspumpe (23), die in der Leitung für Fließmitteltransport zwischen dem Wärmespeicherkörper und dem Wärmetauscher angeordnet ist und ihre Ansaugseite in Verbindung mit einem Expansionsbehälter hat, wodurch ein vorbestimmter Maximaldruck erhalten wird, und durch Temperaturabfühleinrichtungen (24), die derart angeordnet sind, daß die Pumpe angehalten wird, wenn eine vorbestimmte Temperatur in dem Wärmetauscher erreicht wird, so daß in der Leitung (22) in dem Wärmespeicherkörper ein trockener Dampfzustand von mäßigem Druck, der durch den Expansionsbehälter erreicht wird, erzeugt wird, wobei das dampfhaltige Volumen der Leitung derart ist, daß der Dampf auf einmal ausgepreßt wird, wenn die Pumpe ein Startsignal von den Temperaturabfühleinrichtungen für erneute Wärmeüberführung zwischen dem Wärmespeicherkörper und dem Wärmetauscher erhält.

2. Vorrichtung nach Anspruch 1, dadurch gekennzeichnet, daß die Leitung eine offene Leitung in direkter Verbindung mit dem Wärmetauscher ist.

3. Vorrichtung nach Anspruch 1, dadurch gekennzeichnet, daß die Leitung als eine geschlossene Schleife (22) ausgebildet ist.

4. Vorrichtung nach Anspruch 2, dadurch gekennzeichnet, daß eine Steuereinrichtung für die Pumpe einen Thermostaten (24) und/oder eine Thyristor-Einrichtung (41), die die Temperatur in dem Wärmetauscher und/oder am Eingang zu dem Wärmetauscher bzw. an dessen Ausgang abfühlt, aufweist.

5. Vorrichtung nach Anspruch 1, dadurch gekennzeichnet, daß der Wärmespeicherkörper (18) so angeordnet ist, daß er unter Verwendung von elektrischer Nachtenergie auf die besagte hohe Temperatur erwärmt wird.

6. Vorrichtung nach einem oder jedem der vorausgehenden Ansprüche, dadurch gekennzeichnet, daß der Wärmespeicherkörper wenigstens zwei Unterblöcke (36) aufweist, zwischen denen eine Platte mit einer guten Wärmeleitfähigkeit, wie beispielsweise Kupfer, eingefügt ist.

7. Vorrichtung nach Anspruch 6, dadurch gekennzeichnet, daß Rohre (38) auf der Platte zur Ausbildung eines Teils der Leitung (22), die in Verbindung mit dem Wärmetauscher steht, angeordnet sind.

8. Vorrichtung nach Anspruch 1, dadurch gekennzeichnet, daß der Wärmespeicherkörper aus einem Keramikmaterial mit etwa folgender Zusammensetzung, gemessen in Gewichtsprozenten: 37% $Al_2O_3$, 5% $SiO_2$, 17% $FeO_3$, 1,7% $SiO_2$, 38% $CaO$, 0,5% $MgO$ und 0,8% alkalische Mittel, hergestellt ist.

9. Vorrichtung nach einem oder jedem der vorausgehenden Ansprüche, dadurch gekennzeichnet, daß der Wärmespeicher aus einem Keramikmaterial besteht und daß Heizdrähte in Ausnehmungen in dem Keramikmaterial angeordnet und in Reihe mit einer elektrischen Stromquelle verbunden sind.

10. Vorrichtung nach einem oder jedem der vorausgehenden Ansprüche, dadurch gekennzeichnet, daß die Heizrohre in dem Wärmespeicherkörper angeordnet sind.

11. Vorrichtung nach Anspruch 2 oder einem oder jedem der Ansprüche 4 bis 10, dadurch gekennzeichnet, daß der unterste Teil des Wärmespeichers höher als der niedrigste Fließmittelstand in dem Wärmetauscher angeordnet ist.

12. Vorrichtung nach Anspruch 11, dadurch gekennzeichnet, daß die Zirkulationspumpe (23) in der niedrigsten Höhe des Fließmittelsystems angeordnet ist.

**Revendications**

1. Dispositif comprenant un accumulateur de chaleur et un échangeur de chaleur, par exemple une chaudière, ledit accumulateur de chaleur comportant un corps (18) en une matière de capacité calorifique élevée et de point de fusion élevé, par exemple de la fonte, une matière céramique, etc., qui est agencé de manière à être chauffé par énergie électrique (19) à une température beaucoup plus élevée que la température maximale de l'échangeur de chaleur, et un conduit qui contient un fluide en phase liquide de point d'ébullition relativement bas, par exemple de l'eau, en communication de transmission de chaleur avec l'échangeur de chaleur et le corps de l'accumulateur de chaleur, caractérisé en ce qu'il comprend une pompe de circulation (23), disposée dans ledit conduit pour un transport de fluide entre le corps d'accumulateur et l'échangeur de chaleur et dont l'aspiration communique avec un ballon d'expansion, établissant une pression maximale prédéterminée, et des moyens de détection de température (24) agencés de sorte que la pompe est arrêtée lorsqu'une température prédéterminée est atteinte dans l'échangeur de chaleur, ce qui engendre dans ledit conduit (22), à l'intérieur du corps d'accumulateur, un état de vapeur sèche sous pression modérée établie par le ballon d'expansion, le volume de contenance de vapeur du conduit étant tel que la vapeur est immédiatement chassée lorsque le pompe reçoit un signal de mise en route venant desdits moyens de détection de température pour effectuer un nouveau transfert de chaleur entre le corps d'accumulateur et l'échangeur de chaleur.

2. Dispositif suivant la revendication 1, caractérisé en ce que ledit conduit est un conduit ouvert en communication directe avec l'échangeur de chaleur.

3. Dispositif suivant la revendication 1, caractérisé en ce que ledit conduit est en forme de boucle fermée (22).

4. Dispositif suivant la revendication 2, caractérisé en ce qu'un dispositif de commande pour la pompe comprend un thermostat (24) et/ou un dispositif à thyristor (41) détectant la température dans l'échangeur de chaleur et/ou à l'entrée et à la sortie, respectivement, de l'échangeur de chaleur.

5. Dispositif suivant la revendication 1, caractérisé en ce que le corps (18) de l'accumulateur de chaleur est prévu pour être chauffé à ladite température élevée au moyen d'énergie électrique de nuit.

6. Dispositif suivant l'une quelconque des revendications précédentes, caractérisé en ce que le corps d'accumulateur comprend au moins deux sous-blocs (36), entre lesquels est insérée une plaque ayant une bonne capacité de conduction de la chaleur, par exemple en cuivre.

7. Dispositif suivant la revendication 6, caractérisé en ce que des tubes (38) sont agencés sur ladite plaque pour constituer une partie dudit conduit (22) de communication avec l'échangeur de chaleur.

8. Dispositif suivant la revendication 1, caractérisé en ce que le corps d'accumulateur est fabriqué en une matière céramique ayant approximativement la composition suivante, mesurée en poids: 37% $Al_2O_3$, 5% $SiO_2$, 17% $FeO_3$, 1,7% $TiO_2$, 38% CaO, 0,5% MgO et 0,8% d'agents alcalins.

9. Dispositif suivant l'une quelconque des revendications précédentes, caractérisé en ce que l'accumulateur est en une matière céramique et en ce que des câbles chauffants sont placés dans des trous de la matière céramique et connectés en série à une source d'alimentation électrique.

10. Dispositif suivant l'une quelconque des revendications précédentes, caractérisé en ce que des tubes chauffants sont agencés dans le corps d'accumulateur.

11. Dispositif suivant la revendication 2, ou l'une quelconque des revendications 4 à 10, caractérisé en ce que la partie inférieure de l'accumulateur est placée à un niveau supérieur au niveau le plus bas du fluide dans l'échangeur de chaleur.

12. Dispositif suivant la revendication 11, caractérisé en ce que la pompe de circulation (23) est placée au niveau le plus bas du système de fluide.

# FIG. 1

0 124 573

FIG. 2

FIG. 3

FIG. 4

# FIG. 5

0 124 573

# FIG. 6

# FIG. 7

37a, 38a

FIG. 8

18

FIG. 9

28

24

25

29

27

26

30

31